# EUROPÄISCHE PATENTSCHRIFT

(11) **EP 2 020 544 B1**
(45) Veröffentlichungstag und Bekanntmachung des Hinweises auf die Patenterteilung: **02.12.2009**
(21) Anmeldenummer: 08007901.5
(22) Anmeldetag: 24.04.2008
(51) Int. Cl.: F16K 1/22

(54) **Ventil, insbesondere Abgasrückführventil**
Valve, in particular waste gas refeeding valve
Soupape, en particulier soupape de recyclage de gaz d'échappement

(30) Priorität: 02.08.2007 DE 102007036582
(43) Veröffentlichungstag der Anmeldung: 04.02.2009
(73) Patentinhaber: Gustav Wahler GmbH u. Co.KG, 73730 Esslingen (DE)
(72) Erfinder: Oesterle, Joachim, 73776 Altbach (DE); Veiel, Dietmar, 89179 Beimerstetten (DE); Bohnenstengel, Peter, 73730 Esslingen (DE); Lewerenz, Stefan, 76225 Eberswalde (DE)
(74) Vertreter: Kratzsch, Volkhard

(56) Entgegenhaltungen:
- EP-A- 1 958 874
- WO-A-03/019054
- DE-A1- 2 647 989
- DE-A1- 4 423 370
- DE-U1- 20 002 784
- US-A- 3 029 063
- US-A1- 2005 184 268

## Beschreibung

Die Erfindung bezieht sich auf ein Ventil, insbesondere ein Abgasrückführventil, mit den Merkmalen im Oberbegriff des Anspruchs 1.

Es ist ein Ventil der eingangs genannten Art in Form eines Mischhahnes für eine Heizungsanlage bekannt (DE 26 47 989 A1), bei dem die Klappenwelle zweiteilig ausgebildet und aus zwei ringförmigen Lagerelementen zusammengesetzt ist, zwischen denen die Klappe angeordnet und befestigt ist. Die Klappe ist aus mehreren metallischen Klappenlagen zusammengesetzt, die in Schichtbauweise übereinander liegen. Zwischen einer mittleren Klappenlage aus Metall und beidseitigen äußeren Klappenlagen aus Metall sind Dichtungsscheiben aus nachgiebigem Dichtungsmaterial aufgenommen. Die einzelnen Klappenlagen sind durch zwei Nieten zusammengehalten, die in radialem Abstand von der Schwenkachse der Klappe vorgesehen sind. Die Dichtungsscheiben aus nachgiebigem Dichtungsmaterial überragen randseitig die metallischen Klappenlagen und legen sich in der Schließstellung unter Abdichtung an die zugeordnete Gehäuseinnenwand an. Ein derartiges als Mischhahn für eine Heizungsanlage gestaltetes Ventil ist für eine Verwendung als Abgasventil, insbesondere Abgasrückführventil, gänzlich ungeeignet.

Aus der DE 44 23 370 A1 ist ein Drosselklappenstutzen mit darin enthaltener schwenktätigbarer Drosselklappe bekannt, die an beiden Enden Drehlagerstellen zur Lagerung im Gehäuse aufweist. Die Klappe weist zwei in Schichtbauweise übereinanderliegende Klappenlagen aus Hartkunststoff auf, zwischen denen randseitig eine Dichtung eingelegt ist und die hiernach in der Weise verschweißt werden, dass an ihren Rändern abstehende, die Dichtung durchdringende Stifte aus Kunststoffmaterial angeschmolzen und so umgeformt werden, dass sich eine etwa pilzartige Form ergibt. Das Gehäuse und die Klappe selbst bestehen aus einem Hartkunststoff. Hiermit können enge Bauteiltoleranzen, wie sie an metallischen Drosselklappenstutzen üblich sind, nicht realisiert werden. Ein derartiger Drosselklappenstutzen ist für die Steuerung von Abgas ungeeignet.

Aus der US-A-3 029 063 ist ein Schmetterlingsventil bekannt, bei dem die Klappe, die von einer Klappenwelle durchsetzt ist, einen metallischen Kern aufweist, der von einer Gummihülle umschlossen ist. Auch eine Klappengestaltung, die mehrere schichtartig übereinanderliegende metallische Klappenlagen und dazwischen befindliche Gummischichten aufweist, ist darin beschrieben, wobei diese Klappenlagen mittels Nieten zusammengehalten sind. Auch ein derartiges Ventil ist den Anforderungen zur Steuerung von Abgas nicht gewachsen.

Aus der EP 1 277 945 A1 ist ein Ventil bekannt, das an einem Ende einer Baueinheit plaziert ist, die einerseits einen z. B. längs gerichteten Kühler und z. B. parallel dazu andererseits eine Umgehungsleitung (Bypassleitung) aufweist. Durch Schwenkbetätigung der Klappe in eine Richtung wird z. B. der Einlaß zum Kühler freigegeben, so dass in das Gehäuse des Ventils eingeleitetes Medium, z. B. flüssiges oder insbesondere gasförmiges Medium, durch den Innenraum des Gehäuses hindurch in den Einlaß des Kühlers gelangen, diesen passieren und am anderen Ende aus dem Kühler austreten kann. In einer anderen Schwenkstellung der Klappe ist hingegen der Einlaß des Kühlers verschlossen und statt dessen der Innenraum des Ventilgehäuses zum Bypasskanal offen, so dass eingeleitetes Medium statt durch den Kühler in den Bypasskanal eintreten und auf diese Weise den Kühler umgehen kann.

Es hat sich gezeigt, dass bei derartigen Ventilen, insbesondere Abgasrückführventilen, bei denen durch den Innenraum des Gehäuses ein Abgas geleitet wird, die Klappe, die der Umschaltung der Strömung in beschriebener Weise dient, durch Druckpulsationen zum Schwingen angeregt wird. Im ungünstigen Fall kann die Klappe am Gehäuse, z. B. einer dortigen Anschlagfläche, od. dgl. anschlagen. Aufgrund dieser Belastungen werden die Verbindungen, insbesondere Schweißverbindungen, über die die Klappe mit der Klappenwelle fest verbunden ist, stark beansprucht. Es besteht die Gefahr der Beschädigung oder gar der Zerstörung dieser Schweißverbindungen. Das Ventil wird dadurch funktionsunfähig.

Der Erfindung liegt die Aufgabe zugrunde, ein Ventil, insbesondere Abgasrückführventil, der eingangs genannten Art zu schaffen, bei dem auch bei dynamischer Beanspruchung der an der Klappenwelle befestigten Klappe eine große Sicherheit gegen Beschädigung oder gar Zerstörung der festen Verbindungen zwischen der Klappenwelle und der Klappe, insbesondere der Schweißverbindungen, und somit eine Langlebigkeit des Ventils gewährleistet ist.

Die Aufgabe ist bei einem Ventil der eingangs genannten Art gemäß der Erfindung durch die Merkmale im Anspruch 1 gelöst. Vorteilhafte weitere Erfindungsmerkmale und Ausgestaltungen dazu ergeben sich aus den Ansprüchen 2 bis 19. Durch die Erfindung ist eine zumindest zweilagige Klappe geschaffen mit günstigen Belastungsrichtungen der Schweißverbindungen zwischen der Klappenwelle und den Klappenlagen. Je nach Gestaltung der Klappenlagen kann in vorteilhafter Weise mittels dieser die Klappenwelle über einen Umfangswinkel bei einer Klappenlage von zumindest 90° und bei der anderen Klappenlage von z. B. etwa 180°, zusammen also auf einem Umfangswinkel von etwa 270°, umschlossen sein, so dass ein großflächiger und guter Angriff der Klappenlagen an der Klappenwelle die Folge ist. Zwischen den Klappenlagen und der Klappenwelle können linear gerichtete Schweißnähte als Verbindungen hergestellt werden, wobei die Schweißnähte jeweils etwa parallel zur Klappenwelle verlaufen. In vorteilhafter Gestaltung lassen sich diese Schweißnähte an etwa zwei diametral gegenüber liegenden Stellen der Klappenwelle vorsehen. All dies führt zu günstigen Belastungen des aus Klappenwelle und Klappe bestehenden Gebildes. In dieser Form ergibt sich eine Klappe in sog. Sandwichgestaltung, wobei eine solche Klappe eine gute Aufnahme von Kräften und deren Verteilung in der Klappe und zur Klappenwelle ermöglicht. Es hat sich gezeigt, dass auch bei dynamischer Beanspruchung, z. B. bei Schwingungen der Klappe angeregt durch Druckpulsationen, die Verbindung zwischen der Klappenwelle und der Klappe den Beanspruchungen in hohem Maße und auf lange Sicht standhält, ohne dass die Gefahr etwaiger Beschädigungen oder gar Zerstörungen der Verbindungen, insbesondere Schweißverbindungen, besteht. Dadurch wird eine hohe Lebensdauer des Ventils erreicht. Der Aufwand für eine derartige Sandwichklappe gemäß der Erfindung ist gering.

Gegenstand der Erfindung ist ferner ein Verfahren zur Herstellung eines Ventils mit einer Klappe, die über Schweißverbindungen mit der Klappenwelle fest verbunden ist. Ein solches Verfahren ist Gegenstand des Anspruchs 20. Vorteilhafte weitere Erfindungsmerkmale dieses Verfahrens und Ausgestaltungen dieses enthalten die Ansprüche 21 bis 24. Ein solches Verfahren führt zu einer mit einer Klappenwelle fest verbundenen Klappe als weiteren Gegenstand der Erfindung, die die Merkmale in den Ansprüchen 1 bis 19 aufweist.

Weitere Einzelheiten und Vorteile der Erfindung ergeben sich aus der nachfolgenden Beschreibung.

Die Erfindung ist nachfolgend anhand von in den Zeichnungen gezeigten Ausführungsbeispielen näher erläutert. Es zeigen:
- Fig. 1: eine schematische perspektivische Ansicht eines Teils eines insbesondere als Abgasrückführventil ausgebildeten Ventils in einer einem Bypassbetrieb zugeordneten Stellung,
- Fig. 2: eine schematische perspektivische Ansicht des Ventils in Fig. 1 in einer gegenüber Fig. 1 anderen Stellung, die einem Kühlbetrieb entspricht,
- Fig. 3: einen schematischen Schnitt der Klappe des Ventils in der Stellung gemäß Fig. 2 und in größerem Maßstab,
- Fig. 4: eine schematische perspektivische Ansicht der Klappe eines Ventils gemäß einem abgewandelten, zweiten Ausführungsbeispiel,
- Fig. 5: einen schematischen Schnitt entlang der Linie V-V in Fig. 4, wobei die Klappe des Ventils sich in einer Stellung gemäß derjenigen in Fig. 2 und 3 befindet,
- Fig. 6: eine schematische perspektivische Ansicht der Klappe eines Ventils ähnlich derjenigen in Fig. 4 gemäß einem dritten Ausführungsbeispiel.

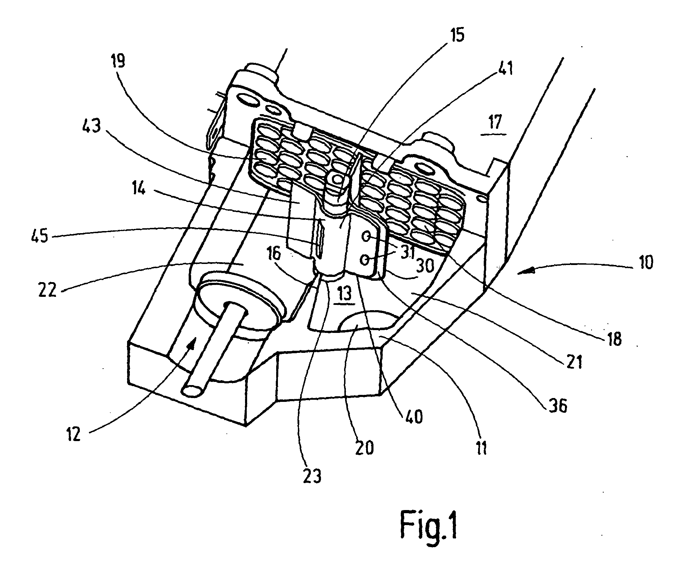

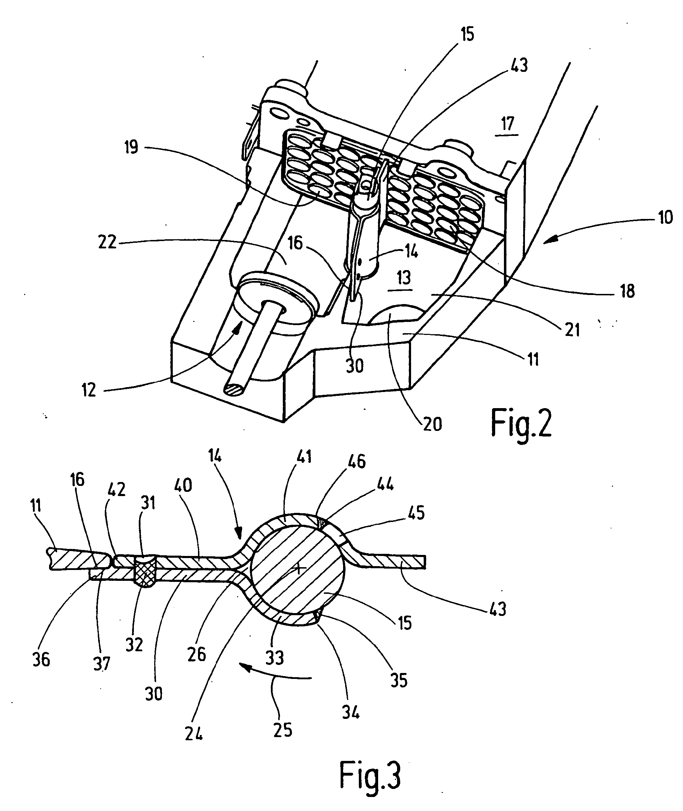

In Fig. 1 bis 3 ist ein Ventil 10 gezeigt, das beispielsweise als Abgasrückführventil ausgebildet ist und in einem Gehäuse 11 mit einem nur schematisch angedeuteten Steuerventil 12 zu einer Ventileinheit vereinigt ist. Im aufgrund der zeichnerischen Darstellung gemäß Fig. 1 und 2 freigelegten Innenraum 13 des Gehäuses 11 ist eine der Steuerung des Durchganges eines flüssigen oder insbesondere gasförmigen Mediums dienende Klappe 14 schwenkbar gehalten. Die Klappe 14 ist an einer Klappenwelle 15 befestigt. Die Klappe 14 liegt zumindest in einer Schwenkstellung, wie sie in Fig. 2 gezeigt ist und die dort einen Kühlerdurchgangsbetrieb für hindurchgeleitetes Abgas ermöglicht, an einer zugeordneten Anschlagfläche 16 des Gehäuses 11 unter Abdichtung im Anlagebereich an. Das Ventil 10 ist an einen nur schematisch angedeuteten Abgaskühler 17 an dessen sichtbarer Stirnseite angesetzt und daran befestigt. Der Einlaß des Abgaskühlers 17 mit dortigen endseitig offenen Rohren ist schematisch mit 18 und der Auslaß mit 19 bezeichnet. In der in Fig. 2 gezeigten Schwenkstellung der Klappe 14 gelangt durch die Öffnung 20 in den Innenraum 13 eingeleitetes Abgas über den Einlaß 18 in den Abgaskühler 17, durchströmt diesen mit einhergehender Kühlung und tritt aus dem Abgaskühler 17 beim Auslaß 19 aus und in den Innenraum 13 ein. Der Innenraum 13 ist durch die Anschlagfläche 16 und den daran angrenzenden Teil des Gehäuses 11 in eine Einlaßkammer 21 und eine Auslaßkammer 22, bezogen auf den Abgasdurchlaß, unterteilt. In der in Fig. 1 dargestellten Schwenkstellung, in der die Klappe 14 fernab von der Anschlagfläche 16 steht, ist zwischen dem Gehäuseteil, der die Anschlagfläche 16 aufweist, und der Klappe 14 ein Durchlaß 23 gebildet, über den über die Öffnung 20 in die Einlaßkammer 21 eingeleitetes Abgas in die Auslaßkammer 22 gelangen kann und von dort z. B. in einen nicht weiter gezeigten Bypasskanal, so dass das Abgas nicht den Abgaskühler 17 durchströmt und nicht mittels dieses gekühlt wird. Der Fluidstrom des Abgases wird im Übrigen durch das Steuerventil 12 gesteuert.

Wie insbesondere aus Fig. 3 ersichtlich ist, weist bei diesem ersten Ausführungsbeispiel die Klappe 14 mindestens zwei in Schichtbauweise übereinander liegende Klappenlagen 30, 40 auf, die zur Klappe 14 zusammengesetzt sind. Die Klappenlagen 30, 40 weisen in einem in Abstand von der Klappenwelle 15 befindlichen Bereich eine oder, wie beim Ausführungsbeispiel gezeigt ist, mehrere, z. B. zwei, Befestigungsstellen 31 auf, an denen die Klappenlagen 30, 40 fest miteinander verbunden sind. Diese Befestigungsstellen 31 befinden sich auf einer, in Fig. 3 der linken, Seite der Längsachse 24 der Klappenwelle 15. Man erkennt, dass diese Befestigungsstellen 31 dort in radialem Abstand von der Längsachse 24 der Klappenwelle 15 vorgesehen sind und dabei beispielsweise dem Außenrand der Klappenlagen 30, 40 näher benachbart sind als der Klappenwelle 15. Die Klappenlagen 30, 40 bilden im Bereich der Befestigungsstellen 31 stofflich eine Einheit, was durch den einzigen durch die Klappenlagen 30, 40 hindurchreichenden materialeinheitlichen Materialpunkt 32 in Fig. 3 verdeutlicht ist. Der Materialpunkt 32 ist eine stoffliche Einheit aus dem Material der Klappenlage 30 und 40 im Bereich der jeweiligen Befestigungsstelle 31. Die Befestigungsstellen 31 können etwa punktförmig oder mit größerer Flächenerstreckung ausgebildet und dabei z. B. etwa kreisförmig sein. Wie z. B. Fig.1 erkennen läßt, folgen mehrere, hier zwei, Befestigungsstellen 31 entlang einer Reihe aufeinander, die etwa parallel zur Klappenwelle 15 verläuft.

Die Befestigungsstellen 31 mit den Materialpunkten 32 sind durch Kaltverformung, z. B. Durchsetzfügen, des Materials der Klappenlagen 30, 40 hergestellt. Man bezeichnet solche Befestigungsstellen 31 mit dem Materialpunkt 32 auch als jeweilige Nietohnenieten-Verbindungen bzw. als sog. Clinchpunkte. Solche werden unter Benutzung der Marke "TOX" auch als sog. "TOX-Punkte" bezeichnet. Bei dem in Fig. 3 gezeigten Ausführungsbeispiel ist zur Verdeutlichung dieser Verbindung mit Entstehung eines Materialpunktes 32 schematisch oberseitig eine Einsenkung und unterseitig eine Ausbeulung dargestellt. Da die Materialen beider Klappenlagen 30, 40 zu einer Materialeinheit verformt werden, sind Materialtrennungen dazwischen nicht darzustellen.

Bei einem anderen, nicht gezeigten Ausführungsbeispiel sind die Befestigungsstellen 31 statt dessen z. B. durch Punktschweißen hergestellt.

Die Klappenwelle 15 verläuft zwischen den beiden Klappenlagen 30, 40 und ist von diesen mit jeweiligen Bogenabschnitten 33 bzw. 41 auf einem Umfangswinkelbereich übergriffen. Die Klappenlagen 30, 40 sind im Bereich dieser Bogenabschnitte 33, 41 mit der Klappenwelle 15 durch Schweißen verbunden. Zumindest eine Klappenlage 30 weist einen über etwa 90°-Umfangswinkel oder auch größer verlaufenden Bogenabschnitt 33 auf und liegt mit diesem Bogenabschnitt 33 auf der Umfangsfläche der Klappenwelle 15 auf. Zumindest eine Klappenlage, z. B. die Klappenlage 30, ist entlang der freien Randkante 34 des Bogenabschnitts 33, die etwa parallel zur Längsachse 24 der Klappenwelle 15 verläuft, durch Schweißen mit der Klappenwelle 15 verbunden. Dies ist durch die längs verlaufende Schweißnaht 35 verdeutlicht.

Beim ersten Ausführungsbeispiel gemäß Fig. 1 bis 3 ist die Anordnung so getroffen, dass die Klappenlagen 30, 40, die auf einer Seite, in Fig. 3 der linken Seite, der Längsachse 24 der Klappenwelle 15 etwa innerhalb einer Diametralebene in Schichtbauweise übereinander liegen, unterschiedlich große Flächenerstreckungen und/oder Abmessungen und/oder Randverläufe aufweisen, derart, dass eine Klappenlage, z. B. die Klappenlage 30, über die andere Klappenlage 40 in axialer und/oder radialer Richtung, bezogen auf die Längsachse 24 der Klappenwelle 15, übersteht. Dadurch ist erreicht, dass die eine Klappenlage 30 ringsum in radialer und axialer Richtung mit einem Randabschnitt 36 über die andere Klappenlage 40 übersteht. Der überstehende Randabschnitt 36 bildet auf einer Seite, in Fig. 3 auf der dortigen Oberseite, eine klappenseitige Anlagefläche 37 zur dichten Anlage der Klappe 14 an einer zugeordneten Anschlagfläche 16 des Gehäuses 11.

Die gehäuseseitige Anschlagfläche 16 erstreckt sich in radialer und axialer Richtung, bezogen auf die Längsachse 24 der Klappenwelle 15 und in einer Schließstellung der Klappe 14, wie sie in Fig. 2 und 3 gezeigt ist, über die ganze klappenseitige Anlagefläche 37 der einen Klappenlage 30 und zumindest im Wesentlichen spaltfrei bis hin zur freien Stirnfläche 42 der anderen Klappenlage 40. Dadurch ist erreicht, dass zwischen dem Rand der Klappe 14 und der gehäuseseitigen Anschlagefläche 16 eine zusätzliche Spaltdichtung in der in Fig. 2 und 3 gezeigten Schwenk- und Schließstellung vorliegt.

Die Klappenlagen 30, 40, die auf einer Seite, in den Zeichnungen auf der linken Seite, der Längsachse 24 der Klappenwelle 15 innerhalb einer Diametralebene liegen, weisen beispielsweise eine rechteckige Randkontur auf, wie diese insbesondere aus Fig. 1 und 2 ersichtlich ist. Statt dessen können die Klappenlagen 30, 40 auch eine bogenförmige Randkontur, z. B. eine etwa halbkreisförmige Randkontur, aufweisen. Die zugeordnete Anschlagfläche 16 des Gehäuses 11 weist eine entsprechende Randkontur auf, z. B. eine solche in U-Form in Anpassung an die rechteckige Randkontur der Klappenlagen 30, 40. Statt dessen kann die Randkontur der Anschlagfläche 16 auch Bogenform aufweisen, z. B. etwa Halbkreisbogenform.

Eine der Klappenlagen, gemäß Fig. 1 bis 3 die in Fig. 3 obere Klappenlage 40, weist einen über etwa 180°-Umfangswinkel verlaufenden Bogenabschnitt 41 auf, wobei die Klappenlage 40 mit diesem Bogenabschnitt 41 auf der Umfangsfläche der Klappenwelle 15 aufliegt. Diese Klappenlage 40, oder statt dessen die andere Klappenlage 30, weist einen zur anderen, in Fig. 3 rechten, Seite der Längsachse 24 der Klappenwelle 15 radial über den Bogenabschnitt 41 hinaus reichenden Flächenabschnitt 43 auf. Dieser Flächenabschnitt 43 wirkt in der in Fig. 2 gezeigten Schwenkstellung der Klappe 14 als Sperrwand, ohne dass dieser Flächenabschnitt 43 an irgendeiner Anschlagfläche anliegt.

Eine der Klappenlagen, insbesondere die Klappenlage 40, die den über etwa 180°-Umfangswinkel verlaufenden Bogenabschnitt 41 aufweist, ist im Bereich dieses Bogenabschnitts 41 mit der Klappenwelle 15 durch Schweißen verbunden. Diese Schweißverbindung ist durch eine Schweißnaht 44 angedeutet. Die eine Klappenlage 40 hat im Bereich ihres Bogenabschnitts 41 einen radial zur Klappenwelle 15 hin offenen Durchlaß 45, z. B. einen etwa parallel zur Klappenwelle 15 verlaufenden Schlitz, ein entsprechendes Langloch od. dgl.. Die Schweißverbindung mit der Klappenwelle 15 ist im Bereich dieses Durchlasses 45 vorgesehen und besteht z. B. aus einer längs zumindest eines Randes 46 des Durchlasses 45 verlaufenden Schweißnaht 44.

Die Schweißverbindungen in Form der Schweißnähte 35, 44 zwischen der Klappenwelle 15 und den Klappenlagen 30 bzw. 40 ist als Laserschweißverbindung, MIG-, MAG-Schweißverbindung od. dgl. sonstige Schweißverbindung ausgeführt.

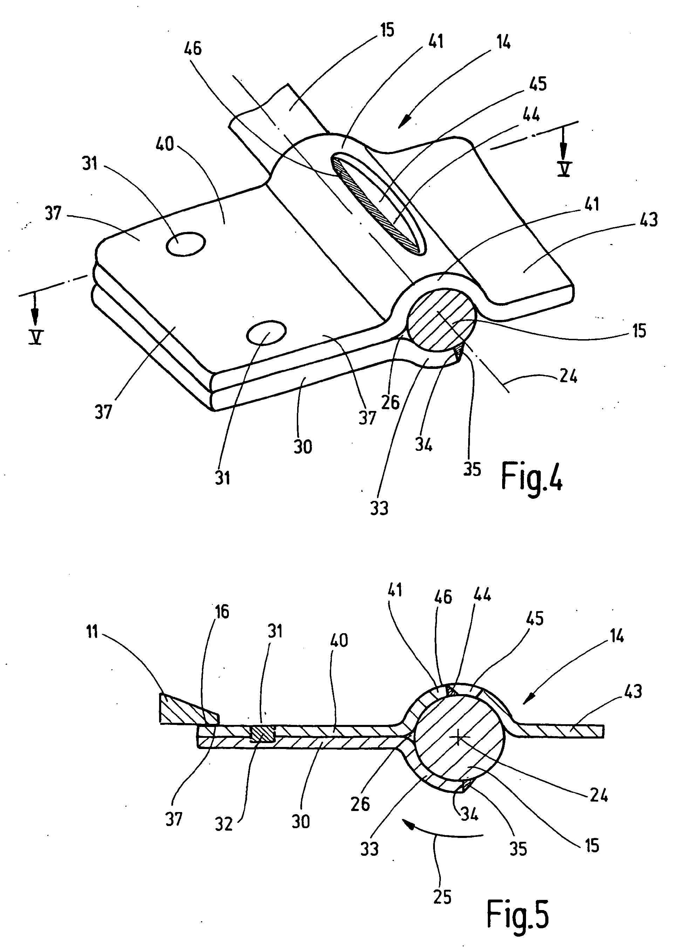

Bei dem in Fig. 4 und 5 gezeigten zweiten Ausführungsbeispiel sind für die Teile, die dem ersten Ausführungsbeispiel in Fig. 1 bis 3 entsprechen, gleiche Bezugszeichen verwendet, so dass dadurch zur Vermeidung von Wiederholungen auf die Beschreibung des ersten Ausführungsbeispieles Bezug genommen ist.

Das zweite Ausführungsbeispiel in Fig. 4 und 5 unterscheidet sich vom ersten Ausführungsbeispiel dadurch, dass die Klappenlagen 30, 40, die auf einer Seite, gemäß Fig. 4 und 5 auf der linken Seite, der Längsachse 24 der Klappenwelle 15 etwa innerhalb einer Diametralebene in Schichtbauweise übereinander liegen, gleich große Flächenerstreckungen und/oder Abmessungen und/oder Randverläufe aufweisen. Auf diese Weise schließen die Klappenlagen 30, 40 in axialer und/oder radialer Richtung randseitig etwa bündig miteinander ab. Die mit der gehäuseseitigen Anschlagfläche 16 zusammenwirkende Anlagefläche 37, die in Folge der Rechteckform der Klappenlagen 30, 40 etwa U-förmig verläuft, befindet sich hier z. B. auf der in Fig. 5 oben liegenden Randseite der Klappenlage 40. Sie ist also, anders als beim ersten Ausführungsbeispiel, an dieser oberen Klappenlage 40 vorgesehen.

Beim zweiten Ausführungsbeispiel in Fig. 4 und 5 ist ferner abweichend vom ersten Ausführungsbeispiel die jeweilige etwa punkförmige oder kreisförmige Befestigungsstelle 31 abweichend gestaltet. Die Klappenlagen 30, 40 bilden auch hier im Bereich der Befestigungsstellen 31 stofflich eine Einheit. Die Befestigungsstellen 31 sind hier z. B. durch Punktschweißen gebildet. Es versteht sich gleichwohl, dass auch bei diesem zweiten Ausführungsbeispiel die Befestigungsstellen 31 wie in Fig. 1 bis 3 durch Kaltverformung hergestellt sein können.

Erkennbar entspricht ansonsten die Klappe 14 gemäß Fig. 4 und 5 derjenigen gemäß dem ersten Ausführungsbeispiel in Fig. 1 bis 3.

Wird beim ersten Ausführungsbeispiel in Fig. 1 bis 3 die dortige Klappe 14 im Uhrzeigersinn gemäß Pfeil 25 um die Längsachse 24 der Klappenwelle 15 durch Drehbetätigung der Klappenwelle 15 mittels eines nicht weiter gezeigten Antriebes in die Schwenkstellung gemäß Fig. 2 und 3 geschwenkt, liegt die in Fig. 3 untere Klappenlage 30 mit der Anlagefläche 37 ihres Randabschnitts 36 an der Anschlagfläche 16 des Gehäuses 11 unter dortiger Abdichtung an. Es wird eine flächige Abdichtung erreicht. Außerdem ergibt sich durch die beschriebene Randgestaltung der Klappe 14 eine zusätzliche Spaltdichtung, so dass eine außerordentlich gute Abdichtung in diesem Bereich erreicht ist. Der z. B. etwa diametral gegenüberliegende Flächenabschnitt 43 der Klappenlage 40 dient in dieser Schwenkstellung als Sperrwand zur Absperrung zwischen den beiden Kammern 21, 22, ohne dass dieser Flächenabschnitt 43 an einer Dichtfläche anliegt. Bedarfsweise ist aber auch eine Dichtanlage möglich, sofern dadurch keine Überbestimmung im Hinblick auf die z. B. etwa diametral gegenüberliegende andere Abdichtung geschieht. Da die Klappenlage 30 mit dem Bogenabschnitt 33 auf der Umfangsfläche der Klappenwelle 15 anliegt und mittels der Schweißnaht 35 mit der Klappenwelle 15 fest verbunden ist, ist eine feste Verbindung in dieser Schwenkstellung gemäß Fig. 2 und 3 gewährleistet. Die Klappenlage 30 ist durch die darüber liegende Klappenlage 40 verstärkt, wobei die Befestigungsstellen 31 in Form der Materialpunkte 32 Kräfte, die an der Klappenlage 30 wirken, aufnehmen und auf die andere Klappenlage 40 verteilen, die mittels der Schweißnaht 44 ebenfalls mit der Klappenwelle 15 fest verbunden ist. Es hat sich gezeigt, dass die Befestigungsstellen 31 in Form der punktförmigen oder etwa kreisförmigen Materialpunkte 32 gewissermaßen zumindest teilelastische Kupplungsstellen zwischen beiden Klappenlagen 30 und 40 bilden, wobei diese Materialpunkte 32 ebenfalls Kräfte aufnehmen und auf die Klappenlagen 30, 40 verteilen können. Auch die Haftreibung der satt aufeinanderliegenden Klappenlagen 30 und 40 und der auf der Umfangsfläche der Klappenwelle 15 aufliegenden Bogenabschnitte 33 und 41 hat zusätzlichen Anteil an einer Kraftaufnahme und Kraftverteilung. Selbst dynamische Beanspruchungen der Klappe 14, wenn sich diese in der Schwenkstellung gemäß Fig. 2 und 3 oder in einer Zwischenstellung befindet, werden von der Klappenwelle 15 und Klappe 14 aufgenommen und so ausgeglichen, dass die Gefahr von Beschädigungen oder gar Brüchen im Bereich der Schweißnähte 35, 44 ausgeschaltet ist.

Wird die Klappe 14 gemäß dem zweiten Ausführungsbeispiel in Fig. 4 und 5 im Uhrzeigersinn gemäß Pfeil 25 um die Längsachse 24 in die Schwenkstellung gemäß Fig. 5 geschwenkt, so dass die Anlagefläche 37 der oberen Klappenlage 40 an der Anschlagfläche 16 des Gehäuses 11 dicht anschlägt, so werden im wesentlichen die in Fig. 5 obere Klappenlage 40 auf Zug in Bezug auf die Klappenwelle 15 und die untere Klappenlage 30 auf Druck in Bezug auf die Klappenwelle 15 belastet. Diese Kräfte werden von der Schweißnaht 35 bzw. 44 problemlos und dauerhaft aufgenommen. Aufgrund der Befestigungsstellen 31 in Form etwa punktförmiger oder etwa kreisförmiger Materialpunkte 32 ergibt sich in diesem Bereich eine zumindest in Grenzen elastische Verbindung zwischen beiden Klappenlagen 30, 40, die ebenfalls Kräfte aufnimmt und zwischen den Klappenlagen 30, 40 verteilt. An der Kraftaufnahme hat ferner die satte Auflage der Klappenlagen 30, 40 aufeinander Anteil sowie ferner die flächige Anlage der Bogenabschnitte 33 und 41 an der äußeren Umfangsfläche der Klappenwelle 15. Durch diese Gestaltung ergibt sich eine überaus große Festigkeit der Klappenwelle 15 mit daran befestigter Klappe 14, wodurch gewährleistet ist, dass die Befestigung der Klappe 14 mittels der Schweißnähte 35 und 44 an der Klappenwelle 15 auch großen, auch dynamischen, Kraftbeanspruchungen auf lange Betriebsdauer sicher widersteht, ohne dass die Gefahr etwaiger Beschädigungen oder gar der Ablösung der Klappe 14 von der Klappenwelle 15 besteht.

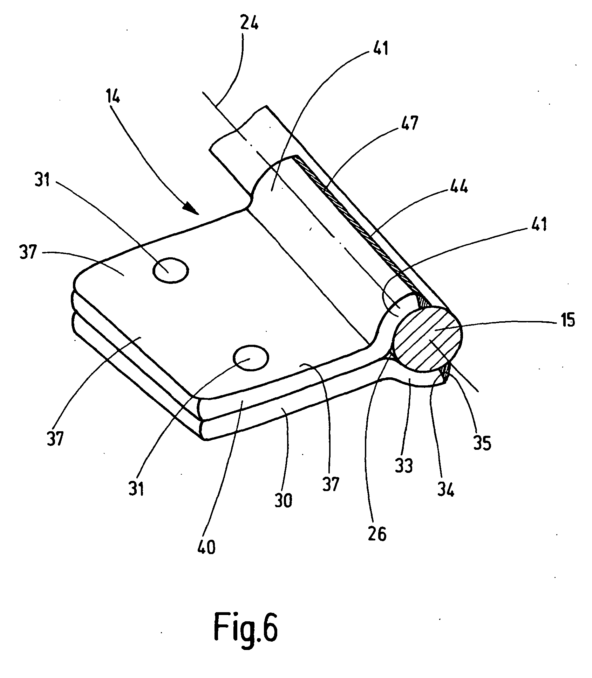

Bei dem in Fig. 6 gezeigten dritten Ausführungsbeispiel sind für die Teile, die den vorangehenden Ausführungsbeispielen entsprechen, gleiche Bezugszeichen verwendet, so dass dadurch zur Vermeidung von Wiederholungen auf die Beschreibung der vorangehenden Ausführungsbeispiele Bezug genommen ist.

Die Klappe 14 gemäß Fig. 6 unterscheidet sich von der Gestaltung gemäß den vorangehenden Ausführungsbeispielen dadurch, dass beide Klappenlagen 30, 40 gleich gestaltet sind. Bei der in Fig. 6 oberen Klappenlage 40 entfällt somit der Flächenabschnitt 43, der bei den vorangehenden Ausführungsbeispielen auf der in der Zeichnung rechts der Längsachse 24 befindlichen Seite der Klappenwelle 15 vorgesehen ist. Statt dessen erstreckt sich auch der Bogenabschnitt 41 der Klappenlage 40 über etwa 90° Umfangswinkel und liegt über diesen Bereich auf der Umfangsfläche der Klappenwelle 15 auf. Auch diese Klappenlage 40 ist entlang der freien Randkante 47 des Bogenabschnitts 41, die etwa parallel zur Längsachse 24 der Klappenwelle 15 verläuft, durch Schweißen mit der Klappenwelle 15 verbunden, wie die dort längs durchlaufende Schweißnaht 44 zeigt. Bei diesem Ausführungsbeispiel entfällt hinsichtlich der Klappe 14 in einer Fig. 2, 3 und 5 entsprechenden Schwenkstellung die durch den Flächenabschnitt 43 verwirklichte Sperrwand und Sperrung zwischen den beiden Kammern 21, 22.

Bei einem anderen nicht gezeigten Ausführungsbeispiel kann die Anschlagfläche 16 des Gehäuses 11 auch so plaziert sein, dass die Klappe 14 in einer Schwenkstellung bei Fig. 3 mit der oberen Klappenlage 40 und bei Fig. 5 mit der unteren Klappenlage 30 daran anliegt. Auch sind solche Schwenkstellungen möglich, bei denen gar keine Anlage an der Anschlagfläche 16 erfolgt, sondern eine Sperrwirkung analog derjenigen durch den Flächenabschnitt 43 und auf diese Weise eine Durchgangssperre erfolgt.

Statt einer axial durchgehenden Klappenwelle 15 ist auch eine zweigeteilte, aus je einem Wellenstummel am jeweiligen Klappenende gebildete Klappenwelle möglich, mit entsprechender Anpassung der Schweißnähte 35, 44 daran.

Bei der Herstellung eines Ventils 10, das in beschriebener Weise gestaltet ist, werden zunächst mindestens zwei Klappenlagen 30, 40, die mit passenden Bogenabschnitten 33, 41 zur Umfassung der Klappenwelle 15 versehen sind, in Schichtlage paßgenau übereinander gelegt und in einem in Abstand vom etwa kreisbogenabschnittförmigen Aufnahmeraum 26 für die Klappenwelle 15 befindlichen Bereich über ein oder mehrere Befestigungsstellen 31 beschriebener Art miteinander fest verbunden. Die Befestigungsstellen 31 werden durch Kaltverformung, z. B. durch Durchsetzfügen, oder Punktschweißen des Materials der Klappenlagen 30, 40 hergestellt. Bei dieser Kaltverformung geschieht ein Fließen des Materials im Bereich der Befestigungsstellen 31, wodurch eine materialeinheitliche Zone in Form punktförmiger oder kreisförmiger Materialpunkte 32 entsteht. Diese Befestigungsstellen 31 werden als jeweilige Nietohnenieten-Verbindungen 32 bzw. als sog. Clinchpunkte ausgebildet. Es versteht sich, dass vor der Verbindung der Klappenlagen 30, 40 mittels der Befestigungsstellen 31 die Klappenlagen 30, 40 passgenau und derart übereinander gelegt werden, dass deren Bogenabschnitte 33, 41 mit ihren Innenflächen einen solchen Kreisbogenabschnitt im Bereich des Aufnahmeraumes 26 bilden, der zur passgenauen und satten Aufnahme der Klappenwelle 15 dienen kann. Nach der Herstellung der Befestigungsstellen 31 mit den Materialpunkten 32 wird die Klappenwelle 15 in den zwischen den Bogenabschnitten 33, 41 der Klappenlagen 30, 40 gebildeten Aufnahmeraum 26 eingebracht, z. B. von einer Seite her eingeschoben. Nach dem Einsetzen der Klappenwelle 15 werden zwischen dieser und den Klappenlagen 30, 40 Schweißverbindungen 35, 44 hergestellt, z. B. durch Laserschweißen, MIG-, MAG- od. dgl. Schweißverfahren. Im Fall der Ausführungsbeispiele in Fig. 1 bis 5 wird die Schweißnaht 44 entlang zumindest des einen Randes 46 des Durchlasses 45 gebildet. Bei der Gestaltung gemäß Fig. 6 werden zwei längs durchgehende Schweißnähte 35 und 44 hergestellt. Auf diese Weise entsteht eine Klappenwelle 15 mit daran fester Klappe 14, die die vorstehend beschriebenen einzelnen Merkmale aufweisen.

## Patentansprüche

1. Ventil, insbesondere Abgasrückführventil, mit einem Gehäuse (11), in dessen Innenraum (13) eine der Steuerung des Durchganges eines gasförmigen oder flüssigen Mediums dienende, an einer Klappenwelle (15) befestigte Klappe (14) schwenkbar gehalten ist, die vorzugsweise in zumindest einer Schwenkstellung an einer zugeordneten Anschlagfläche (16) des Gehäuses (11) unter Abdichtung anliegt und mindestens zwei in Schichtbauweise übereinander liegende Klappenlagen (30, 40) aufweist, die in einem in Abstand von der Klappenwelle (15) befindlichen Bereich eine oder mehrere Befestigungsstellen (31) aufweisen, an denen die Klappenlagen (30, 40) fest miteinander verbunden sind,
**dadurch gekennzeichnet,**
**dass** die Klappenwelle (15) zwischen den beiden Klappenlagen (30, 40) durchgehend verläuft und von diesen mit jeweiligen Bogenabschnitten (33, 41) auf einem Umfangswinkelbereich übergriffen ist und dass die Klappenlagen (30, 40) im Bereich der Bogenabschnitte (33, 41) mit der Klappenwelle (15) durch Schweißen (35, 44) verbunden sind.

2. Ventil nach Anspruch 1,
**dadurch gekennzeichnet,**
**dass** die Befestigungsstellen (31), mittels denen die Klappenlagen (30, 40) auf einer Seite der Längsachse (24) der Klappenwelle (15) fest miteinander verbunden sind, in radialem Abstand von der Längsachse (24) der Klappenwelle (15) vorgesehen sind, vorzugsweise dem außenrand der Klappenlagen (30, 40) näher benachbart sind, als der Klappenwelle (15).

3. Ventil nach Anspruch 1 oder 2,
**dadurch gekennzeichnet,**
**dass** die Klappenlagen (30, 40) im Bereich der Befestigungsstellen (31) stofflich eine Einheit bilden.

4. Ventil nach einem der Ansprüche 1 bis 3,
**dadurch gekennzeichnet,**
**dass** bei mehreren Befestigungsstellen (31) diese entlang einer Reihe aufeinanderfolgen, die etwa parallel zur Klappenwelle (15) verläuft.

5. Ventil nach einem der Ansprüche 1 bis 4,
**dadurch gekennzeichnet,**
**dass** die Befestigungsstellen (31) etwa punktförmig oder etwa kreisförmig sind.

6. Ventil nach einem der Ansprüche 1 bis 5,
**dadurch gekennzeichnet,**
**dass** die Befestigungsstellen (31) durch Kaltverformung, z. B. durch Durchsetzfügen, oder durch Punktschweißen des Materials der Klappenlagen (30, 40) hergestellt sind.

7. Ventil nach Anspruch 6,
**dadurch gekennzeichnet,**
**dass** die Befestigungsstellen (31) als jeweilige Nietohnenieten-Verbindungen (32) bzw. sog. Clinchpunkte ausgebildet sind.

8. Ventil nach einem der Ansprüche 1 bis 7,
**dadurch gekennzeichnet,**
**dass** zumindest eine Klappenlage (30; 40) einen etwa über 90° Umfangswinkel oder größer verlaufenden Bogenabschnitt (33; 41) aufweist und mit diesem Bogenabschnitt (33; 41) auf der Umfangsfläche der Klappenwelle (15) aufliegt.

9. Ventil nach Anspruch 8,
**dadurch gekennzeichnet,**
**dass** zumindest eine Klappenlage (30; 40) entlang der freien Randkante (34; 47) des Bogenabschnitts (33; 41), die etwa parallel zur Klappenwelle (15) verläuft, durch Schweißen (35; 44) mit der Klappenwelle (15) verbunden ist.

10. Ventil nach einem der Ansprüche 1 bis 9,
**dadurch gekennzeichnet,**
**dass** die Klappenlagen (30, 40), die auf einer Seite der Längsachse (24) der Klappenwelle (15) etwa innerhalb einer Diametralebene in Schichtbauweise übereinander liegen, unterschiedlich große Flächenerstreckungen und/oder Abmessungen und/oder Randverläufe aufweisen, derart, dass eine Klappenlage (30) über die andere Klappenlage (40) in axialer und/oder radialer Richtung, bezogen auf die Längsachse (24) der Klappenwelle (15), übersteht.

11. Ventil nach Anspruch 10,
**dadurch gekennzeichnet,**
**dass** eine Klappenlage (30) ringsum in radialer und axialer Richtung mit einem Randabschnitt (36) über die andere Klappenlage (40) übersteht und der überstehende Randabschnitt (36) auf einer Seite eine klappenseitige Anlagefläche (37) zur dichten Anlage der Klappe (14) an einer zugeordneten Anschlagfläche (16) des Gehäuses (11) bildet.

12. Ventil nach Anspruch 11,
**dadurch gekennzeichnet,**
**dass** die Anschlagfläche (16) in radialer und axialer Richtung, bezogen auf die Längsachse (24) der Klappenwelle (25) und in einer Schließstellung der Klappe (14), sich über die ganze klappenseitige Anlagefläche (37) der einen Klappenlage (30) und zumindest im Wesentlichen spaltfrei bis zur freien Stirnfläche (42) der anderen Klappenlage (40) erstreckt, derart, dass zwischen dem Klappenrand (36, 37, 42) und der Anschlagfläche (16) eine zusätzliche Spaltdichtung vorliegt.

13. Ventil nach einem der Ansprüche 1 bis 9,
**dadurch gekennzeichnet,**
**dass** die Klappenlagen (30 und 40), die auf einer Seite der Längsachse (24) der Klappenwelle (15) etwa innerhalb einer Diametralebene in Schichtbauweise übereinander liegen, gleich große Flächenerstreckungen und/oder Abmessungen und/oder Randverläufe aufweisen, derart, dass die Klappenlagen (30 und 40) in axialer und/oder radialer Richtung randseitig etwa bündig miteinander abschließen.

14. Ventil nach einem der Ansprüche 1 bis 13,
**dadurch gekennzeichnet,**
**dass** die Klappenlagen (30, 40), die auf einer Seite der Längsachse (24) der Klappenwelle (15) innerhalb einer Diametralebene in Schichtbauweise übereinander liegen, eine rechteckige Randkontur oder eine bogenförmige, z. B. etwa halbkreisförmige, Randkontur aufweisen und dass die zugeordnete Anschlagfläche (16) des Gehäuses (11) eine entsprechende Randkontur aufweist, z. B. eine U-Form oder Bogenform, z. B. etwa Halbkreisbogenform.

15. Ventil nach einem der Ansprüche 1 bis 14,
**dadurch gekennzeichnet,**
**dass** eine der Klappenlagen (30, 40) einen über etwa 180° Umfangswinkel verlaufenden Bogenabschnitt (41) aufweist und mit diesem Bogenabschnitt (41) auf der Umfangsfläche der Klappenwelle (15) aufliegt.

16. Ventil nach Anspruch 15,
**dadurch gekennzeichnet,**
**dass** eine der Klappenlagen (30, 40) einen zur anderen Seite der Längsachse (24) der Klappenwelle (15) radial über den Bogenabschnitt (41) hinaus reichenden Flächenabschnitt (43) aufweist.

17. Ventil nach einem der Ansprüche 1 bis 16,
**dadurch gekennzeichnet,**
**dass** eine der Klappenlagen (30, 40), insbesondere diejenige, die einen über etwa 180° Umfangswinkel verlaufenden Bogenabschnitt (41) aufweist, im Bereich des Bogenabschnitts (41) mit der Klappenwelle (15) durch Schweißen (44) verbunden ist.

18. Ventil nach einem der Ansprüche 1 bis 17,
**dadurch gekennzeichnet,**
**dass** eine der Klappenlagen (30, 40) im Bereich ihres Bogenabschnitts (41) einen radial zur Klappenwelle (15) hin offenen Durchlaß (45), z. B. einen etwa parallel zu Klappenwelle (15) verlaufenden Schlitz, ein entsprechendes Langloch od. dgl., aufweist, und dass die Schweißverbindung (44) mit der Klappenwelle (15) im Bereich des Durchlasses (45), z. B. längs zumindest eines Randes (46) des Durchlasses (45), vorgesehen ist.

19. Ventil nach einem der Ansprüche 1 bis 18,
**dadurch gekennzeichnet,**
**dass** die jeweilige Schweißverbindung (35, 44) zwischen der Klappenwelle (15) und den Klappenlagen (30, 40) als Laserschweißverbindung, MIG-, MAG-Schweißverbindung od. dgl. Schweißverbindung ausgeführt ist.

20. Verfahren zur Herstellung eines Ventils (10) mit einer Klappe (14), nach einem der Ansprüche 1 bis 19,
**dadurch gekennzeichnet,**
**dass** mindestens zwei Klappenlagen (30, 40), die mit Bogenabschnitten (33, 41) zur Umfassung der Klappenwelle (15) versehen sind, in Schichtlage paßgenau übereinander gelegt werden und in einem in Abstand von einem etwa kreisbogenabschnittförmigen Aufnahmeraum (26) für die Klappenwelle (15) befindlichen Bereich über eine oder mehrere Befestigungsstellen (31) fest miteinander verbunden werden.

21. Verfahren nach Anspruch 20,
**dadurch gekennzeichnet,**
**dass** die Befestigungsstellen (31) durch Kaltverformung, z. B. durch Durchsetzfügen, oder durch Punktschweißen des Materials der Klappenlagen (30, 40) hergestellt werden.

22. Verfahren nach Anspruch 21,
**dadurch gekennzeichnet,**
**dass** die Befestigungsstellen (31) als jeweilige Nietohnenieten-Verbindungen (32) bzw. sog. Clinchpunkte ausgebildet werden.

23. Verfahren nach einem der Ansprüche 20 bis 22,
**dadurch gekennzeichnet,**
**dass** nach der Herstellung der Befestigungsstellen (31, 32) die Klappenwelle (15) in den zwischen den Bogenabschnitten (33, 41) der Klappenlagen (30, 40) gebildeten Aufnahmeraum (26) eingebracht wird, z. B. eingeschoben wird.

24. Verfahren nach einem der Ansprüche 20 bis 23,
**dadurch gekennzeichnet,**
**dass** nach dem Einsetzen der Klappenwelle (15) Schweißverbindungen (35, 44) zwischen der Klappenwelle (15) und den Klappenlagen (30, 40) durch insbesondere Laserschweißen, MIG-, MAG-Schweißen od. dgl. Schweißverfahren hergestellt werden.

25. Klappe für ein Ventil, insbesondere ein Abgasrückführventil,
**gekennzeichnet durch**
die Merkmale in einem oder mehreren der vorhergehenden Ansprüche 1 - 19.

## Claims

1. Valve, in particular exhaust gas recirculation valve, with a housing (11), in the inner space (13) of which is held pivotable a flap (14) which serves for controlling the passage of a gaseous or liquid medium and is fastened to a flap shaft (15) and which preferably in at least one pivoting position bears sealingly against an assigned stop face (16) of the housing (11) and has at least two flap plies (30, 40) which lie one above the other in a layered type of construction and which, in a region located at a distance from the flap shaft (15), have one or more fastening points (31) at which the flap plies (30, 40) are fixedly connected to one another, **characterized in that** the flap shaft (15) runs continuously between the two flap plies (30, 40) and is overlapped by these with respective arcuate segments (33, 41) over a circumferential angle range, and **in that** the flap plies (30, 40) are connected to the flap shaft (15) in the region of the arcuate segments (33, 41) by means of welding (35, 44).

2. Valve according to Claim 1, **characterized in that** the fastening points (31), by means of which the flap plies (30, 40) are fixedly connected to one another on one side of the longitudinal axis (24) of the flap shaft (15), are provided at a radial distance from the longitudinal axis (24) of the flap shaft (15), preferably are more closely adjacent to the outer margin of the flap plies (30, 40) than to the flap shaft (15).

3. Valve according to Claim 1 or 2, **characterized in that** the flap plies (30, 40) materially form a unit in the region of the fastening points (31).

4. Valve according to one of Claims 1 to 3, **characterized in that,** in the case of a plurality of fastening points (31), these succeed one another in a row which runs approximately parallel to the flap shaft (15).

5. Valve according to one of Claims 1 to 4, **characterized in that** the fastening points (31) are approximately spot-shaped or approximately circular.

6. Valve according to one of Claims 1 to 5, **characterized in that** the fastening points (31) are produced by cold forming, for example by studding, or by the spot welding of the material of the flap plies (30, 40).

7. Valve according to Claim 6, **characterized in that** the fastening points (31) are formed as respective rivetless riveted connections (32) or what are known as clinch points.

8. Valve according to one of Claims 1 to 7, **characterized in that** at least one flap ply (30; 40) has an arcuate segment (33; 41) extending over a circumferential angle of about 90° or more and lies with this arcuate segment (33; 41) on the circumferential face of the flap shaft (15).

9. Valve according to Claim 8, **characterized in that** at least one flap ply (30; 40) is connected to the flap shaft (15) by welding (35; 44) along that free marginal edge (34; 47) of the arcuate segment (33; 41) which runs approximately parallel to the flap shaft (15).

10. Valve according to one of Claims 1 to 9, **characterized in that** the flap plies (30, 40) which lie one above the other in a layered type of construction, approximately within a diametral plane, on one side of the longitudinal axis (24) of the flap shaft (15) have area extents and/or dimensions and/or marginal profiles of different size, in such a way that one flap ply (30) projects beyond the other flap ply (40) in the axial and/or the radial direction with respect to the longitudinal axis (24) of the flap shaft (15).

11. Valve according to Claim 10, **characterized in that** one flap ply (30) projects with a marginal segment (36) beyond the other flap ply (40) all-round and in the radial and axial direction, and the projecting marginal segment (36) forms on one side a flap-side bearing face (37) for the leak-tight bearing of the flap (14) against an assigned stop face (16) of the housing (11).

12. Valve according to Claim 11, **characterized in that** the stop face (16) extends in the radial and axial direction with respect to the longitudinal axis (24) of the flap shaft (15), and in a closing position of the flap (14), over the entire flap-side bearing face (37) of one flap ply (30) and, at least essentially free of gaps, as far as the free end face (42) of the other flap ply (40), in such a way that an additional gap seal is present between the flap margin (36, 37, 42) and the stop face (16).

13. Valve according to one of Claims 1 to 9, **characterized in that** the flap plies (30 and 40) which lie one above the other in a layered type of construction, approximately within a diametral plane, on one side of the longitudinal axis (24) of the flap shaft (15) have area extents and/or dimensions and/or marginal profiles of equal size, in such a way that the flap plies (30 and 40) are marginally approximately flush with one another in the axial and/or the radial direction.

14. Valve according to one of Claims 1 to 13, **characterized in that** the flap plies (30, 40) which lie one above the other in a layered type of construction, within a diametral plane, on one side of the longitudinal axis (24) of the flap shaft (15) have a rectangular marginal contour or an arcuate, for example approximately semi-circular, marginal contour, and **in that** the assigned stop face (16) of the housing (11) has a corresponding marginal contour, for example a U-shape or arc shape, for example approximately semi-circular arc shape.

15. Valve according to one of Claims 1 to 14, **characterized in that** one of the flap plies (30, 40) has an arcuate segment (41) extending over a circumferential angle of about 180° and lies with this arcuate segment (41) on the circumferential face of the flap shaft (15).

16. Valve according to Claim 15, **characterized in that** one of the flap plies (30, 40) has a face segment (43) extending radially beyond the arcuate segment (41) onto the other side of the longitudinal axis (24) of the flap shaft (15).

17. Valve according to one of Claims 1 to 16, **characterized in that** one of the flap plies (30, 40), in particular that which has an arcuate segment (41) extending over a circumferential angle of about 180°, is connected to the flap shaft (15) in the region of the arcuate segment (41) by welding (44).

18. Valve according to one of Claims 1 to 17, **characterized in that** one of the flap plies (30, 40) has in the region of its arcuate segment (41) a passage (45) open radially towards the flap shaft (15), for example a slot running approximately parallel to the flap shaft (15), a corresponding long hole or the like, and **in that** the welded connection (44) to the flap shaft (15) is provided in the region of the passage (45), for example along at least one margin (46) of the passage (45).

19. Valve according to one of Claims 1 to 18, **characterized in that** the respective welded connection (35, 44) between the flap shaft (15) and the flap plies (30, 40) is in the form of a laser-welded connection, MIG or MAG welded connection or suchlike welded connection.

20. Method for producing a valve (10) having a flap (14) according to one of Claims 1 to 19, **characterized in that** at least two flap plies (30, 40), which are provided with arcuate segments (33, 41) for surrounding the flap shaft (15), are laid one above the other with an exact fit in a layered arrangement and are connected fixedly to one another via one or more fastening points (31) in a region located at a distance from a reception space (26) for the flap shaft (15), the said reception space being approximately in the form of a segment of the arc of a circle.

21. Method according to Claim 20, **characterized in that** the fastening points (31) are produced by cold forming, for example by studding, or by the spot welding of the material of the flap plies (30, 40).

22. Method according to Claim 21, **characterized in that** the fastening points (31) are formed as respective rivetless riveted connections (32) or what are known as clinch points.

23. Method according to one of Claims 20 to 22, **characterized in that,** after the production of the fastening points (31, 32), the flap shaft (15) is introduced, for example pushed, into the reception space (26) formed between the arcuate segments (33, 41) of the flap plies (30, 40).

24. Method according to one of Claims 20 to 23, **characterized in that,** after the insertion of the flap shaft (15), welded connections (35, 44) are made between the flap shaft (15) and the flap plies (30, 40), in particular by laser welding, MIG or MAG welding or suchlike welding methods.

25. Flap for a valve, in particular an exhaust gas recirculation valve, **characterized by** the features in one or more of the preceding Claims 1-19.

## Revendications

1. Soupape, en particulier soupape de recyclage de gaz d'échappement, comprenant un boîtier (11), dans l'espace interne (13) duquel est retenu de manière pivotante un clapet (14) fixé à un arbre de clapet (15) et servant à commander le passage d'un milieu gazeux ou liquide, qui s'applique de préférence dans au moins une position de pivotement contre une surface de butée associée (16) du boîtier (11) de manière hermétique et présente au moins deux couches de clapet (30, 40) superposées dans une construction stratifiée, qui présentent, dans une région située à distance de l'arbre de clapet (15), un ou plusieurs points de fixation (31) auxquels les couches de clapet (30, 40) sont connectées fixement les unes aux autres, **caractérisée en ce que**
l'arbre de clapet (15) s'étend en continu entre les deux couches de clapet (30, 40) et est engagé par le dessus par celles-ci par des portions d'arc respectives (33, 41) sur une plage angulaire périphérique et **en ce que** les couches de clapet (30, 40) sont connectées à l'arbre de clapet (15) par soudage (35, 44) dans la région des portions d'arc (33, 41).

2. Soupape selon la revendication 1,
**caractérisée en ce que**
les points de fixation (31), au moyen desquels les couches de clapet (30, 40) sont connectées fixement les unes aux autres sur un côté de l'axe longitudinal (24) de l'arbre de clapet (15), sont prévus à distance radiale de l'axe longitudinal (24) de l'arbre de clapet (15), de préférence sont plus proches du bord extérieur des couches de clapet (30, 40) que l'arbre de clapet (15).

3. Soupape selon la revendication 1 ou 2,
**caractérisée en ce que**
les couches de clapet (30, 40) forment une unité dans la région des points de fixation (31) par liaison de matière.

4. Soupape selon l'une quelconque des revendications 1 à 3,
**caractérisée en ce que**
dans le cas où il y a plusieurs points de fixation (31), ceux-ci sont alignés successivement le long d'une rangée qui s'étend approximativement parallèlement à l'arbre de clapet (15).

5. Soupape selon l'une quelconque des revendications 1 à 4,
**caractérisée en ce que**
les points de fixation (31) sont approximativement ponctuels ou approximativement circulaires.

6. Soupape selon l'une quelconque des revendications 1 à 5,
**caractérisée en ce que**
les points de fixation (31) sont fabriqués par formage à froid, par exemple par agrafage, ou par soudage par points du matériau des couches de clapet (30, 40).

7. Soupape selon la revendication 6,
**caractérisée en ce que**
les points de fixation (31) sont réalisés sous forme de connexions rivetées sans rivets (32) respectives ou ce qu'on appelle des points de pinçage.

8. Soupape selon l'une quelconque des revendications 1 à 7,
**caractérisée en ce**
**qu'**au moins une couche de clapet (30 ; 40) présente une portion d'arc (33 ; 41) s'étendant sur un angle circonférentiel supérieur à environ 90° ou plus, et s'applique avec cette portion d'arc (33 ; 41) sur la surface périphérique de l'arbre de clapet (15).

9. Soupape selon la revendication 8,
**caractérisée en ce**
**qu'**au moins une couche de clapet (30 ; 40) est connectée le long de l'arête de bord libre (34 ; 47) de la portion d'arc (33 ; 41), qui s'étend approximativement parallèlement à l'arbre de clapet (15), par soudage (35 ; 44) à l'arbre de clapet (15).

10. Soupape selon l'une quelconque des revendications 1 à 9,
**caractérisée en ce que**
les couches de clapet (30, 40), qui sont disposées l'une au-dessus de l'autre d'un côté de l'axe longitudinal (24) de l'arbre de clapet (15) approximativement à l'intérieur d'un plan diamétral suivant une construction stratifiée, présentent des étendues de surface et/ou des dimensions et/ou des étendues de bords de tailles différentes de telle sorte qu'une couche de clapet (30) dépasse de l'autre couche de clapet (40) dans la direction axiale et/ou radiale, par rapport à l'axe longitudinal (24) de l'arbre de clapet (15).

11. Soupape selon la revendication 10,
**caractérisée en ce**
**qu'**une couche de clapet (30) dépasse de l'autre couche de clapet (40) tout autour dans la direction radiale et axiale avec une portion de bord (36), et la portion de bord (36) qui dépasse forme d'un côté une surface d'appui (37) du côté du clapet pour l'application hermétique du clapet (14) contre une surface de butée (16) associée du boîtier (11).

12. Soupape selon la revendication 11,
**caractérisée en ce que**
la surface de butée (16), dans la direction radiale et axiale, par rapport à l'axe longitudinal (24) de l'arbre de clapet (15) et dans une position de fermeture du clapet (14), s'étend sur toute la surface d'appui (37), du côté du clapet, de l'une des couches de clapet (30) et au moins essentiellement sans jeu jusqu'à la surface frontale libre (42) de l'autre couche de clapet (40), de telle sorte qu'entre le bord de clapet (36, 37, 42) et la surface de butée (16), il existe un joint d'étanchéité à fente supplémentaire.

13. Soupape selon l'une quelconque des revendications 1 à 9,
**caractérisée en ce que**
les couches de clapet (30 et 40), qui sont superposées d'un côté de l'axe longitudinal (24) de l'arbre de clapet (15) approximativement à l'intérieur d'un plan diamétral dans une construction stratifiée, présentent des étendues de surface et/ou des dimensions et/ou des étendues de bord de même taille, de telle sorte que les couches de clapet (30 et 40) se terminent approximativement en affleurement l'une avec l'autre du côté des bords dans la direction axiale et/ou radiale.

14. Soupape selon l'une quelconque des revendications 1 à 13,
**caractérisée en ce que**
les couches de clapet (30, 40) qui sont superposées d'un côté de l'axe longitudinal (24) de l'arbre de clapet (15) à l'intérieur d'un plan diamétral suivant une construction stratifiée, présentent un contour de bord rectangulaire ou un contour de bord de forme courbe, par exemple approximativement semi-circulaire, et **en ce que** la surface de butée associée (16) du boîtier (11) présente un contour de bord correspondant, par exemple une forme en U ou une forme cintrée, par exemple approximativement en forme d'arc semi-circulaire.

15. Soupape selon l'une quelconque des revendications 1 à 14,
**caractérisée en ce que**
l'une des couches de clapet (30, 40) présente une portion d'arc (41) s'étendant sur un angle périphérique d'environ 180° et s'applique avec cette portion d'arc (41) sur la surface périphérique de l'arbre de clapet (15).

16. Soupape selon la revendication 15,
**caractérisée en ce que**
l'une des couches de clapet (30, 40) présente une portion de surface (43) s'étendant radialement au-delà de la portion d'arc (41) vers l'autre côté de l'axe longitudinal (24) de l'arbre de clapet (15).

17. Soupape selon l'une quelconque des revendications 1 à 16,
**caractérisée en ce que**
l'une des couches de clapet (30, 40), en particulier celle qui présente une portion d'arc (41) s'étendant sur un angle périphérique d'environ 180°, est connectée par soudage (44) à l'arbre de clapet (15) dans la région de la portion d'arc (41).

18. Soupape selon l'une quelconque des revendications 1 à 17,
**caractérisée en ce que**
l'une des couches de clapet (30, 40) dans la région de sa portion d'arc (41) présente un passage (45) ouvert radialement vers l'arbre de clapet (15), par exemple une fente s'étendant approximativement parallèlement à l'arbre de clapet (15), un trou oblong correspondant, ou similaire, et **en ce que** la connexion soudée (44) à l'arbre de clapet (15) est prévue dans la région du passage (45), par exemple le long d'au moins un bord (46) du passage (45).

19. Soupape selon l'une quelconque des revendications 1 à 18,
**caractérisée en ce que**
la connexion soudée respective (35, 44) entre l'arbre de clapet (15) et les couches de clapet (30, 40) est réalisée sous forme de connexion par soudage laser, par soudage MIG ou MAG, ou par une connexion soudée similaire.

20. Procédé de fabrication d'une soupape (10) comprenant un clapet (14) selon l'une quelconque des revendications 1 à 19,
**caractérisé en ce**
**qu'**au moins deux couches de clapet (30, 40), qui sont pourvues de portions d'arc (33, 41) pour entourer l'arbre de clapet (15), sont disposées l'une au-dessus de l'autre avec ajustement serré en strates, et sont connectées fixement l'une à l'autre dans une région se trouvant à distance d'un espace de réception (26) approximativement en forme de portion d'arc de cercle pour l'arbre de clapet (15) par le biais d'un ou de plusieurs points de fixation (31).

21. Procédé selon la revendication 20,
**caractérisé en ce que**
les points de fixation (31) sont fabriqués par formage à froid, par exemple par agrafage, ou par soudage par points du matériau des couches de clapet (30, 40).

22. Procédé selon la revendication 21,
**caractérisé en ce que**
les points de fixation (31) sont réalisés sous forme de connexions rivetées sans rivets (32) respectives ou ce qu'on appelle des points de pinçage.

23. Procédé selon l'une quelconque des revendications 20 à 22,
**caractérisé en ce**
**qu'**après la fabrication des points de fixation (31, 32), l'arbre de clapet (15) est introduit dans l'espace de réception (26) formé entre les portions d'arc (33, 41) des couches de clapet (30, 40), par exemple en l'enfonçant.

24. Procédé selon l'une quelconque des revendications 20 à 23,
**caractérisé en ce**
**qu'**après l'insertion de l'arbre de clapet (15), des connexions soudées (35, 44) sont créées entre l'arbre de clapet (15) et les couches de clapet (30, 40), notamment par soudage laser, par soudage MIG ou MAG, ou par un procédé de soudage similaire.

25. Clapet pour une soupape, notamment une soupape de recyclage de gaz d'échappement,
**caractérisé par**
les caractéristiques de l'une ou plusieurs des revendications précédentes 1 à 19.
